# EUROPÄISCHE PATENTANMELDUNG

(11) **EP 0 546 481 A1**
(43) Veröffentlichungstag der Anmeldung: **16.06.1993**
(21) Anmeldenummer: 92120766.8
(22) Anmeldetag: 04.12.1992
(51) Int. Cl.: F24J 2/46

(54) **Solarkollektor**

(30) Priorität: 13.12.1991 DE 4141195
(71) Anmelder: Müller, Friedrich, D-74564 Crailsheim (DE)
(72) Erfinder: Müller, Friedrich, D-74564 Crailsheim (DE)
(74) Vertreter: von Hellfeld, Axel, Dr. Dipl.-Phys.

(57) **Zusammenfassung**

Ein Sonnenenergiekollektor bzw. eine aus mehreren solchen Kollektoren zusammengesetzte Anlage zeichnen sich dadurch aus, daß mit dem Kollektorgehäuse (10a, 10b, 10c) jeweils zumindest ein Behälter (14) gasleitend verbunden ist, der bei einer Wärmeexpansion des Gases im Gehäuse bzw. den Gehäusen sein Volumen vergrößert, wobei in der gasleitenden Verbindung 12 zumindest eine Schadstoffe absorbierende Einrichtung (16) angeordnet ist.

## Beschreibung

Die Erfindung betrifft einen Solarkollektor sowie eine Solarkollektoranlage aus mehreren solchen Kollektoren.

Aus der DE-OS 26 26 974 A1 ist ein Solarkollektor bekannt mit einem Gehäuse, mit dem zumindest ein Behälter gasleitend verbunden ist, der bei einer Wärmeexpansion des Gases im Gehäuse sein Volumen vergrößert. Eine Trockenvorrichtung, also eine Schadstoffe wie Wasser absorbierende Einrichtung, ist dort getrennt von dem Behälter angeordnet, der sein Volumen bei Wärmeexpansion des Gases vergrößert.

Die DE-OS 28 15 213 A1 beschreibt einen Solarkollektor, bei dem das Gehäuse mit der umgebenden Atmosphäre über eine Schadstoffe absorbierende Einrichtung verbunden ist. Die Anordnung eines sich bei Wärmeexpansion vergrößernden Behälters ist dort nicht vorgesehen.

Aus der DE 40 03 400 A1 ist ein Sonnenenergiekollektor mit einem Gehäuse bekannt, das über eine Schadstoffe absorbierende Einrichtung mit der Atmosphäre außerhalb des Gehäuses verbindbar ist. Um eine unnötige Belastung der Schadstoffe absorbierenden Einrichtung mit Feuchtigkeit zu vermeiden, wird bei diesem Stand der Technik der Absorber dann, wenn kein Luftaustausch zwischen dem Inneren des Kollektorgehäuses und der äußeren Atmosphäre erfolgt, von der Atmosphäre abgetrennt.

Dieser Stand der Technik erreicht zwar schon eine ganz erhebliche Verbesserung dahingehend, daß der Schadstoffe, insbesondere Feuchtigkeit, aufnehmende Absorber im Unterschied zum älteren Stand der Technik nicht dauernd mit der Atmosphäre in Verbindung steht und dadurch eine unnötige Belastung des Absorbers vermieden ist. Gleichwohl erfolgt in den Zeiten, in denen eine Wärmeexpansion oder auch umgekehrt eine Kontraktion des Gases im Gehäuse aufgrund einer Abkühlung erfolgt, eine sich wiederholende Belastung des Absorbers mit Schadstoffen (insbesondere Wasser) aus der äußeren Atmosphäre.

Außerdem erfolgt bei jedem Ein- oder Auslassen von Luft aus dem Sonnenenergiekollektor-Gehäuse ein Wärmeverlust.

Weiterhin hat die bei jeder Kontraktion der Luft im Gehäuse entstehende Frischluftströmung in das Gehäuse hinein zur Folge, daß der Absorber (auch Entfeuchtungspatrone genannt) relativ stark mit Schadstoffen (Wasser) belastet wird, so daß er von Zeit zu Zeit entweder regeneriert oder ersetzt werden muß. In Bereichen mit starker Luftverschmutzung wird der Absorber überdies stark verschmutzt und es ist nicht auszuschließen, daß nach langjährigem Betrieb des Sonnenkollektors Schadstoffe in das Innere des Gehäuses gelangen.

Die Erfindung hat das Ziel, den vorstehend geschilderten Stand der Technik dahingehend weiter zu verbessern, daß mit einfachen Mitteln Schadstoffe vom Inneren des Kollektorgehäuses ferngehalten werden, wobei eine die Schadstoffe absorbierende Einrichtung möglichst gering belastet werden soll und überdies der Wärmeverlust bei einer Expansion des Gases im Gehäuse möglichst gering gehalten werden soll.

Bei einem Sonnenenergiekollektor mit einem Gehäuse wird diese Aufgabe erfindungsgemäß dadurch gelöst, daß mit dem Gehäuse zumindest ein Behälter gasleitend verbunden ist, der bei einer Wärmeexpansion des Gases im Gehäuse sein Volumen vergrößert, und daß in der gasleitenden Verbindung zumindest eine Schadstoffe absorbierende Einrichtung angeordnet ist.

Bei einer aus mehreren Kollektoren zusammengesetzten Sonnenenergiekollektoranlage sieht die erfindungsgemäße Lösung der Aufgabe vor, daß die Gehäuse über eine gemeinsame Leitung mit zumindest einem Behälter gasleitend verbunden sind, der bei einer Wärmeexpansion des Gases in den Gehäusen sein Volumen vergrößert, und daß in der gasleitenden Verbindung zumindest eine Schadstoffe absorbierende Einrichtung angeordnet ist.

Gemäß einer bevorzugten Ausgestaltung des vorstehend beschriebenen Energiekollektors bzw. der aus mehreren Kollektoren zusammengesetzten Anlage ist vorgesehen, daß der sein Volumen bei Wärmeexpansion des Gases vergrößernde Behälter mit dem Gehäuse bzw. den Gehäusen und der gasleitenden Verbindung einen Kreislauf bildet, wobei mittels zumindest eines Ventils die Strömungsrichtung von Gas im Kreislauf festgelegt ist.

Um das Eindringen von Luft, insbes. Sauerstoff, aus der äußeren Atmosphäre in das Innere des Kollektorgehäuses zu verhindern, ist gemäß einer weiteren bevorzugten Ausgestaltung der Erfindung vorgesehen, daß mittels des Behälters ein Gasdruck im Gehäuse bzw. den Gehäusen eingestellt ist, der größer ist als der zu erwartende äußere Atmosphärendruck. Dies ist insbesondere dann in einfacher Weise möglich, wenn der Behälter elastisch dehnbar ist. In diesem Falle bestimmt die Dehnungskonstante des Behälters den Druck im Inneren des Gehäuses.

Weitere vorteilhafte Ausgestaltungen der Erfindung ergeben sich aus den Unteransprüchen und aus der nachfolgenden Beschreibung, in der mehrere Ausführungsbeispiele anhand der Zeichnung näher erläutert sind. Es zeigt:
Fig.1 schematisch eine aus drei Kollektoren zusammengesetzte Sonnenkollektoranlage mit einer erfindungsgemäßen Einrichtung zum Entfernen von Schadstoffen und zur Kompensation von Wärmedehnungen;
Fig.2 eine Abwandlung des Ausführungsbeispiels gemäß Fig.1;
Fig.3 mehrere Varianten von Behältern, die ihr Volumen bei einer Expansion des Gases im Kollektorgehäuse ändern;
Fig.4 schematisch einen Schnitt durch einen Sonnenenergiekollektor;
Fig.5 eine Draufsicht auf einen einzigen, großflächigen Sonnenenergiekollektor mit einer Einrichtung zum Entfernen von Schadstoffen und zur Kompensation einer Wärmeexpansion des Gases im Kollektorgehäuse;
Fig.6 - 11 mehrere Varianten von Anordnungen einzelner Sonnenenergiekollektoren;
Fig.12 einen Vertikalschnitt durch einen Sonnenenergiekollektor;
Fig.13 + 14 jeweils ein Ausführungsbeispiel für einen Behälter, der sein Volumen bei Wärmeexpansion ändert, in einem Schutzgehäuse;
Fig.15 + 16 jeweils einen Vertikalschnitt durch einen Sonnenenergiekollektor;
Fig.17 einen Schnitt durch einen Sonnenenergiekollektor gemäß Fig. 15;
Fig.18 - 20 jeweils einen Schnitt durch einen Sonnenenergiekollektor mit Zweifach-Verglasung; und
Fig.21 schematisch ein weiteres Ausführungsbeispiel eines Sonnenenergiekollektors, bei dem im Inneren des Gehäuses ein expansionsfähiger Körper angeordnet ist, der gasleitend mit der äußeren Atmosphäre verbunden ist.

In den Figuren sind einander entsprechende Bauteile jeweils mit dem gleichen Bezugszeichen versehen, wobei Varianten ggf. mit einem Zusatz in Form eines kleinen Buchstabens gekennzeichnet sind.

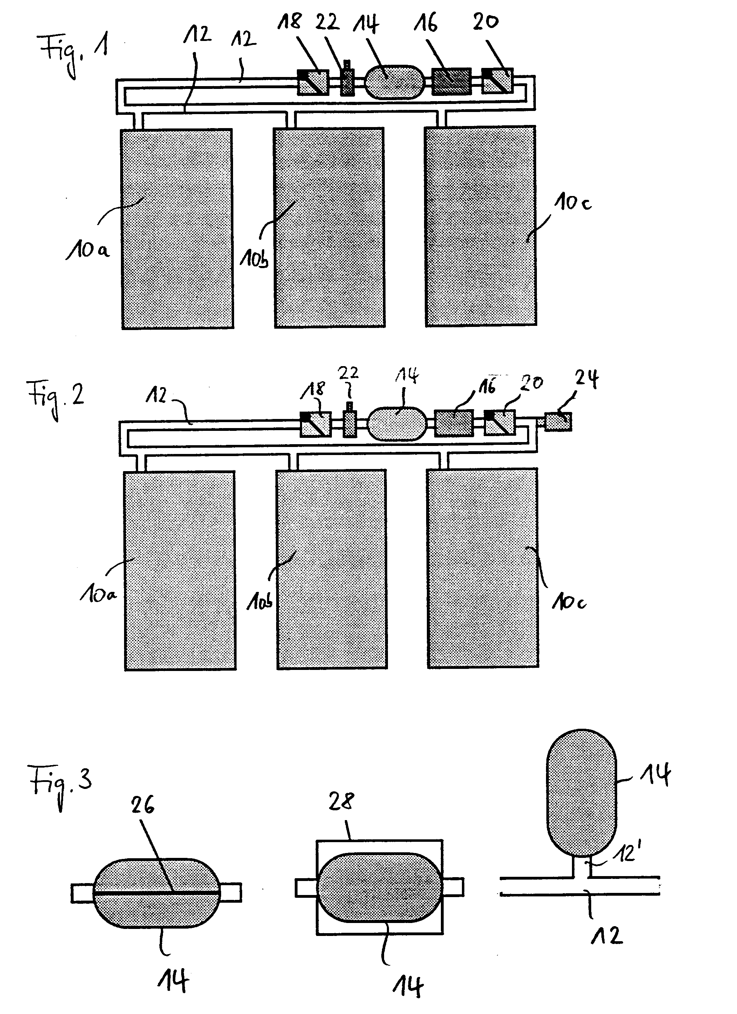

Fig.1 zeigt schematisch eine Sonnenkollektoranlage mit drei Kollektoren, die jeweils ein Gehäuse 10a, 10b, 10c aufweisen.

Alle drei Gehäuse 10a, 10b, 10c sind jeweils über Zuleitungen mit einer Leitung 12 verbunden, die in sich einen geschlossenen Kreislauf bildet.

In der Leitung 12 ist ein Behälter 14 angeordnet, der bei Expansion des Gases in den Gehäusen 10a, 10b, 10c sein Volumen vergrößern kann, so daß bei der Wärmeexpansion kein Austausch von Gas vom Inneren der Gehäuse mit der äußeren Atmosphäre erfolgt.

Gemäß Fig.1 ist in der Leitung 12 in Reihe mit dem Behälter 14 ein Absorber 16 geschaltet, der durchströmendes Gas von Schadstoffen befreit. Die Schadstoffe bleiben also im Absorber 16 hängen. Dies gilt insbesondere für Feuchtigkeit, wie Wasser.

Damit das Gas nur in einer einzigen Richtung durch die Leitung 12 strömt, sind Einwegventile 18, 20 vorgesehen, die zum Beispiel als einfache Rückschlagklappen ausgebildet sein können.

Weiterhin ist an der Leitung 12 ein Ventil 22 angeordnet, daß bei einem vorgegebenen Über-oder Unterdruck öffnet und so entweder Gas aus den Gehäusen in die äußere Atmosphäre abgibt oder umgekehrt Gas aus der äußeren Atmosphäre in das Innere der Gehäuse einläßt. Aufgrund der in Fig.1 gezeigten Anordnung des Ventils 22 ist im Zusammenwirken mit den Einwegventilen gewährleistet, daß insbesondere in die Gehäuse 10a, 10b und 10c eintretendes Gas den Absorber 16 passiert.

Das Ausführungsbeispiel gemäß Fig.2 versteht sich aufgrund der angegebenen Bezugszeichen und der vorstehenden Beschreibung von selbst. Zusätzlich ist ein weiteres Ventil 24 an der gezeigten Stelle angeordnet, um Gas in die Gehäuse 10a, 10b und 10c nachfüllen zu können.

Die Fig.3 zeigt schematisch drei Varianten für den Behälter 14, der bei Wärmeexpansion bzw. -kontraktion des Gases in den Gehäusen sein Volumen ändert. Beim in Fig.3 links gezeigten Ausführungsbeispiel ist als Behälter eine Blase aus gummiartigem Material vorgesehen, wobei eine Distanzstange 26 dafür sorgt, daß die Anordnung eine ausreichende mechanische Stabilität hat. Beim in Fig.3 in der Mitte gezeigten Ausführungsbeispiel übernimmt diese Funktion ein Gehäuse 28, in dem sich der Behälter 14, der hier ebenfalls in der Art einer Blase ausgeführt ist, ausdehnen bzw. zusammenziehen kann.

Bei den beiden vorstehend beschriebenen Ausführungsbeispielen gewährleisten die Distanzstange 26 bzw. das Gehäuse 28, daß sich die mit dem Behälter 14 verbundene Rohrstrecke in der Leitung 12 nicht verändert, d.h. die Blase ändert sich bei einer Volumenvergrößerung bzw. -verkleinerung nur hinsichtlich ihres Durchmessers, nicht aber hinsichtlich ihrer Länge. Aufgrund der bei Sonnenkollektoren auftretenden Temperaturen ist der Behälter 14 aus einem Material, das bis zu 200 _{°} ver- trägt, z.B. aus Silikon.

Das in Fig.3 rechts gezeigte Ausführungsbeispiel zeigt einen Behälter 14, der aus hinreichend stabilem Material besteht, so daß eine Distanzstange oder ein Gehäuse nicht erforderlich ist. Der Behälter 14 ist nicht direkt in die Leitung 12 integriert, sondern über eine Nebenleitung 12' mit der Leitung 12 verbunden, so daß er sich ausdehnen bzw. zusammenziehen kann, ohne daß weitere Einrichtungen zur mechanischen Stabilisierung der Anordnung erforderlich wären.

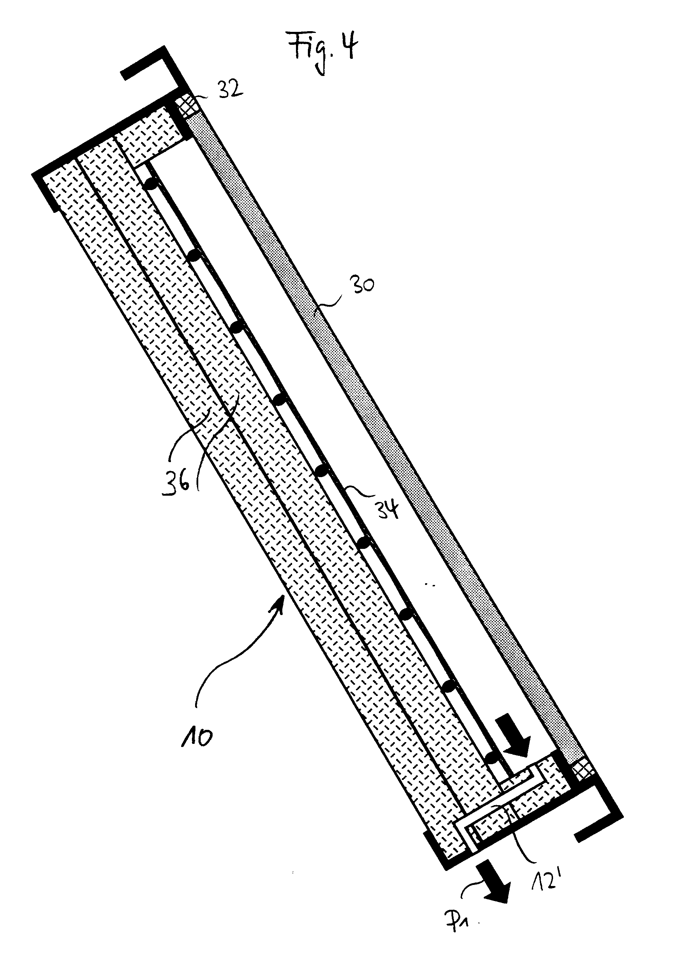

Fig.4 zeigt einen als solches bekannten Sonnenenergiekollektor im Schnitt. Das Gehäuse 10 ist sonnenseitig mit einer Glasplatte 30 (oder einer Platte aus anderem für Sonnenstrahlung durchlässigem Material) abgedeckt. Zwischen der Glasplatte 30 und einem Absorber 34 ist im Gehäuse 10 ein Innenraum gebildet, der das hier in Rede stehende Gas enthält. Rückseitig ist das Gehäuse 10 durch Wärmeisolatoren 36 abgedeckt. In den Isolatoren ist eine Leitung 12' ausgebildet, die zu der in den Fig.1 und 2 gezeigten Leitung 12 führt. Die Pfeile P₁ zeigen die Strömungsrichtung des Gases bei einer Wärmeexpansion. Bei einer Kontraktion des Gases ist die Strömungsrichtung umgekehrt.

Aufgrund der in den Fig.1 und 2 gezeigten Anordnung des Behälters 14 und des Absorbers 16 in einem geschlossenen Kreislauf in bezug auf die Gehäuse der einzelnen Kollektoren ist gewährleistet, daß immer wieder das gleiche Gas durch den Absorber strömt. Es besteht keine leitende Verbindung zwischen dem Inneren der Kollektorgehäuse und der äußeren Atmosphäre. Somit ist die Belastung der Absorber äußerst gering, da keine Schadstoffe und keine Feuchtigkeit aus der äußeren Atmosphäre mit dem System in Berührung kommen. Es werden nur solche Schadstoffe ausgefiltert bzw. solche Feuchtigkeit absorbiert, die im Kollektorgehäuse enthalten sind. Dies sind geringe Mengen. Auch eventuell durch Undichtigkeiten hinzutretende Feuchtigkeit bzw. Schadstoffe sind äußerst gering. Dadurch wird die Belastung des Absorbers gering gehalten und seine Regenerierung oder sein Austausch erübrigt sich im Normalfall.

Die Luft im Kollektorgehäuse kann werksseitig bereits vorgetrocknet und gereinigt werden, um zu verhindern, daß während des Transportes und der Montage durch die Lüftungsschlitze ein zu starker Luftaustausch stattfindet. Hierzu sind alle Öffnungen des Kollektorgehäuses mit Membranen verschlossen, die über einen Schlitz verfügen und bei etwas Über- oder Unterdruck Luft aus- bzw. einlassen.

Statt mit Luft kann der Kollektor auch mit einem geeigneten Gas gefüllt sein, welches eine geringe Wärmeaufnahme und/oder Wärmeleitfähigkeit besitzt. Der Kollektor sowie der Kreislauf (Leitung 12 und zugehörige Teile) sind dann bereits werksseitig mit diesem Gas gefüllt und verschlossen. Erst bei der Montage der Kollektoren und des den Dehnungsbehälter aufweisenden Kreislaufes werden die Anschlüsse geöffnet und die Verbindungsleitungen hergestellt.

Damit bei Unterdruck (Abkühlung) kein Gas, insbesondere Sauerstoff, in das Innere der Kollektorgehäuse gelangen kann, ist gemäß einer bevorzugten Ausgestaltung vorgesehen, daß mittels des unter Spannung stehenden Behälters 14 oder mittels eines separaten Gasreservoirs stets ein geringer Überdruck in den Gehäusen sowie der Leitung 12 in bezug auf die äußere Atmosphäre gegeben ist. Geht nach einer längeren Zeit der Überdruck verloren, so kann er über das Ventil 24 wieder erzeugt werden.

Die Anordnung der Bauteile gemäß den Fig.1 und 2 ist so, daß keine Schwerkraftzirkulation erfolgt.

Fig.5 zeigt ein Ausführungsbeispiel, bei dem ein relativ großflächiger Kollektor verwendet wird, der für sich bereits eine vollständige Solaranlage bildet. Dieser Kollektor weist ein einziges Gehäuse 10 auf, mit dem die Leitung 12 einen geschlossenen Kreislauf bildet, in dem die oben bereits beschriebenen Bauteile, also insbesondere der sein Volumen ändernde Behälter 14 und der Absorber 16 angeordnet sind. Diese Teile können in einfacher Weise in einem Schutzgehäuse 38 angeordnet sein, das beispielsweise rohrförmig ist. Das Kollektorgehäuse 10 weist also zwei gesonderte Anschlüsse zum Verbinden der beiden Enden der Leitung 12 auf.

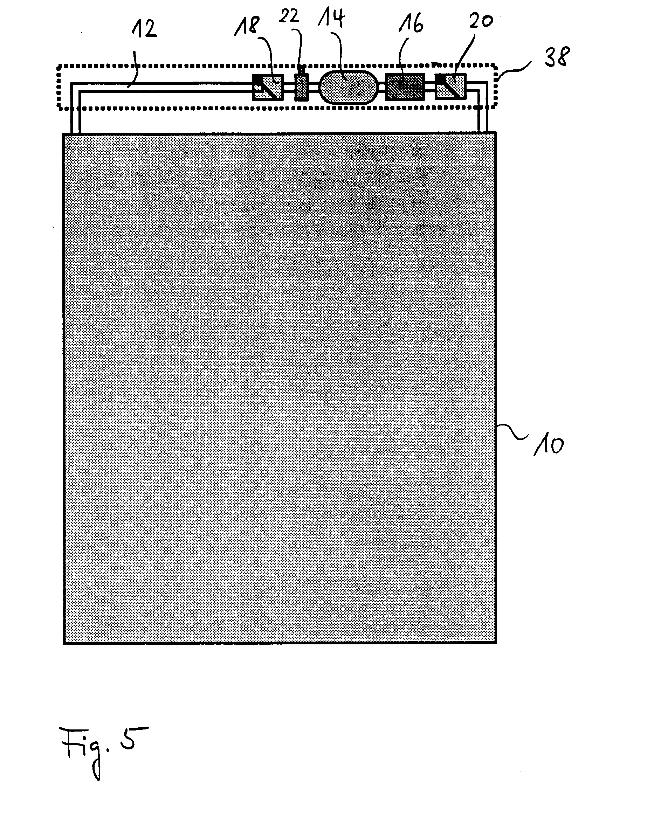

Die Fig.6 bis 7 zeigen verschiedene Anordnungen von einzelnen Kollektorgehäusen mit Dehnungsbehältern und Absorbern.

Beim Ausführungsbeispiel gemäß Fig.6 ist an einem einzigen Gehäuse ein Behälter 14 angeordnet, der über einen Absorber 16 in leitender Verbindung mit dem Inneren des Gehäuses steht. Die Anordnung des Behälters 14 und des Absorbers 16 ist also in der Art einer "Sackgasse". Es findet kein Kreislauf statt, sondern der Weg des Gases (Luft) nimmt immer den gleichen Verlauf, nur in jeweils entgegengesetzer Richtung, je nachdem, ob sich das Gas im Gehäuse thermisch ausdehnt oder zusammenzieht.

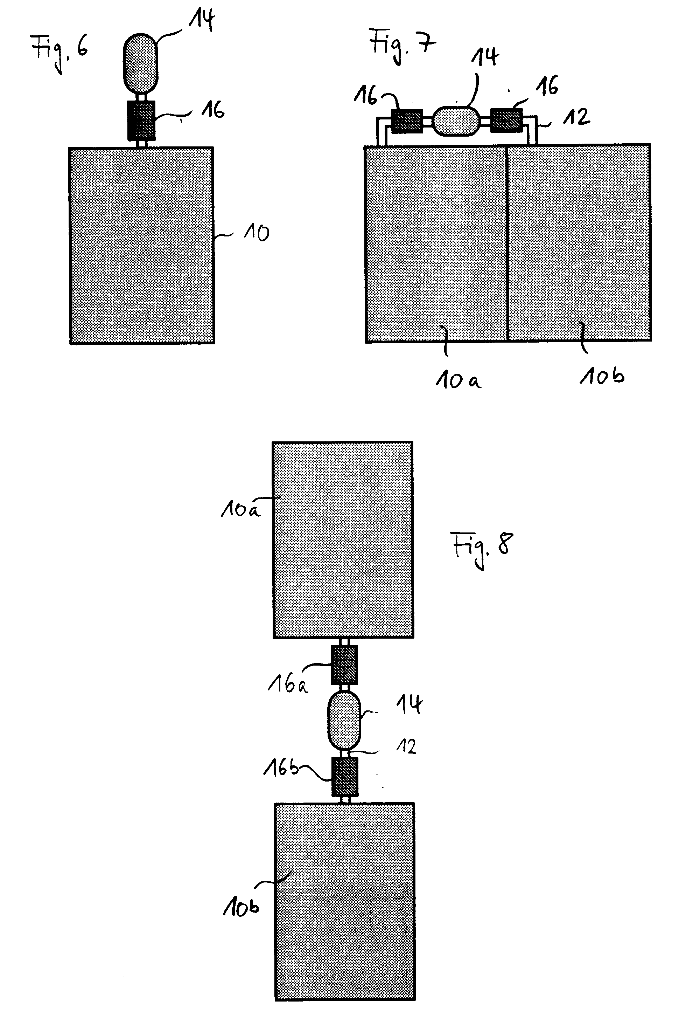

Bei den Ausführungsbeispielen gemäß den Fig.7 und 8 bildet die Leitung 12 nicht mehr einen geschlossenen Kreislauf, vielmehr erfolgt die Strömung des Gases bei einer Wärmeexpansion bzw. einer Kontraktion in verschiedenen Richtungen, da Rückschlagventile bei diesen Ausführungsbeispielen nicht vorgesehen sind. Die Absorber 16 bzw. 16a, 16b sind deshalb beidseitig des Dehnungsbehälters 14 angeordnet.

Bei Überdruck in den Gehäusen 10a, 10b wird das Gas von beiden Seiten durch die Absorber in den Dehnungsbehälter 14 gedrückt. Bei einer Kontraktion des Gases bei Abkühlung wird das Gas wieder aus dem Dehnungsbehälter 14 durch die Absorber in das Innere der Kollektorgehäuse zurückgeführt. Bei jeder Gasbewegung erfolgt eine Reinigung.

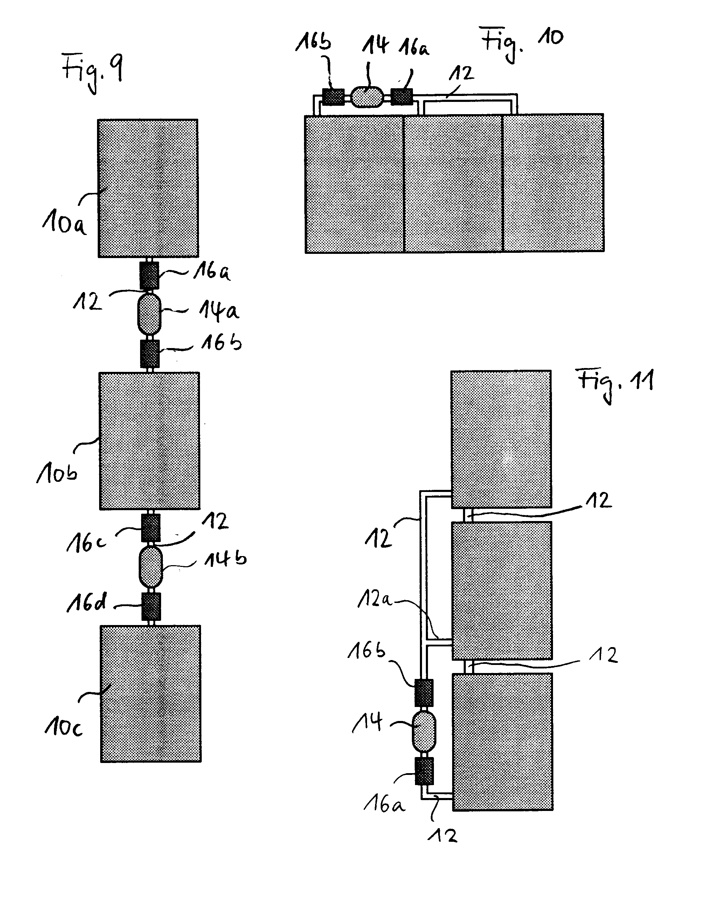

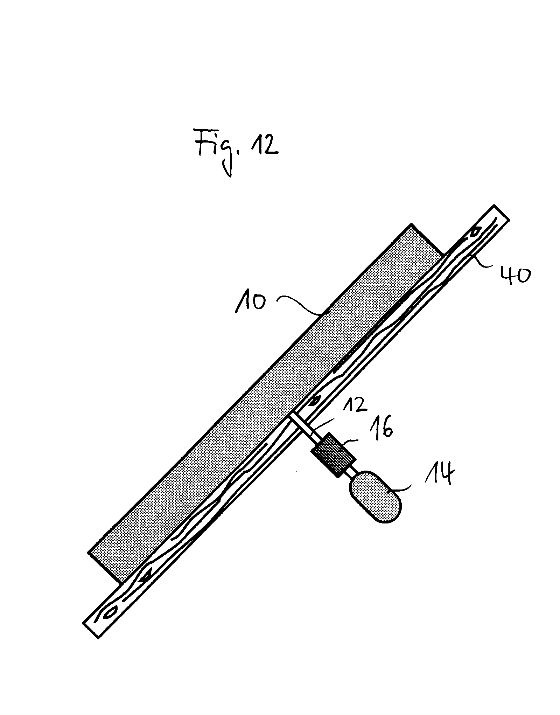

Die Ausführungbeispiele gemäß den Fig.9 bis 11 verstehen sich von selbst.

Fig.12 zeigt, daß der Behälter 14 und der zugeordnete Absorber 16 sowie die Verbindungsleitung 12 auch rückseitig (in bezug auf die Sonneneinstrahlungsrichtung) des Gehäuses 10 angeordnet sein können. Dies ist zum Beispiel dann sinnvoll, wenn die Vorrichtung innerhalb des Daches (auf dem Dachboden) angebracht werden soll. Besonders bei Großflächenkollektoren (Fig.6) bietet sich diese Lösung an.

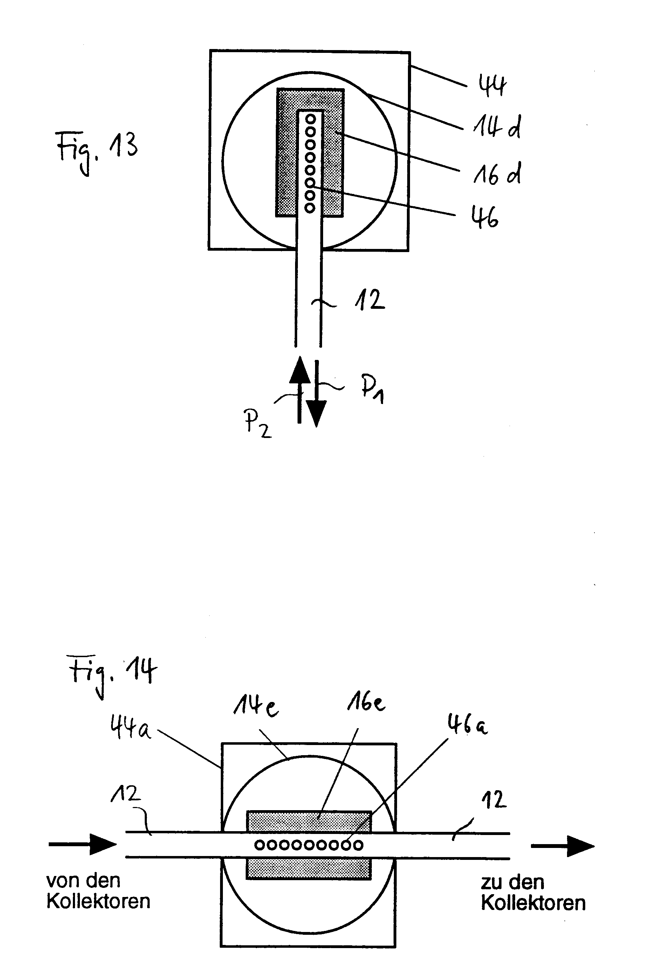

Die Fig.13 und 14 zeigen Ausführungsbeispiele einer besonderen Gestaltung des Dehnungsbehälters 14. Der Behälter ist hier jeweils als Dehnungsblase ausgebildet.

In den Figuren kennzeichnen die Pfeile die Bewegungsrichtung der Luft. Beim Ausführungsbeispiel gemäß Fig.13 ist der Behälter als Dehnungsblase 14d ausgebildet, die in einem Schutzgehäuse 44 angeordnet ist. Bei Wärmeexpansion des Gases im Kollektorgehäuse (in Fig.13 nicht gezeigt) strömt Gas in Richtung des Pfeils P₂ durch die Leitung 12 und durch Löcher 46 sowie durch den Absorber 16d in die Blase 14d, die sich im starren Gehäuse 44 ausdehnt. Bei Abkühlung strömt dann in umgekehrter Richtung das Gas aus der Blase 14d durch den Absorber 16d und die Löcher 46 sowie die Leitung 12 in Richtung des Pfeiles P₁ wieder zurück zum Kollektorgehäuse.

Fig.14 zeigt eine Abwandlung des Ausführungsbeispiels gemäß Fig.13, bei dem bei Wärmeexpansion Gas über die Löcher 46a und den Absorber 16e in die Dehnungsblase 14e einströmt, die in einem starren Gehäuse 44a angeordnet ist.

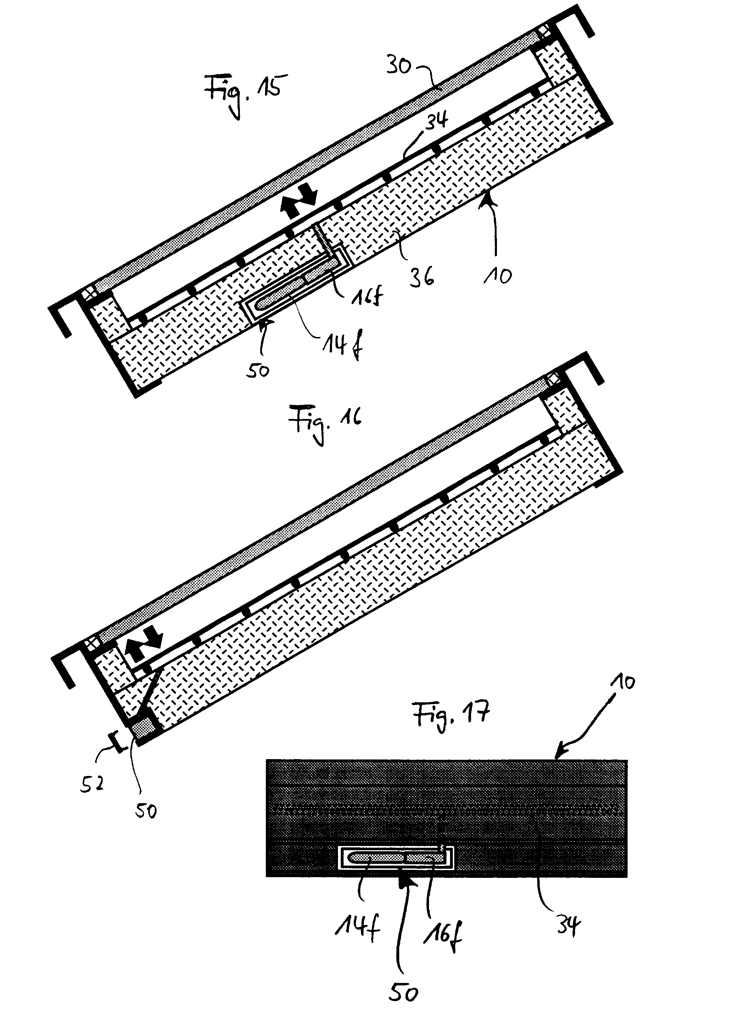

Die Ausführungsbeispiele gemäß den Fig.15 bis 17 zeigen eine Abwandlung der vorstehend beschriebenen Ausführungsbeispiele dahingehend, daß der Behälter (bzw. die Behälter) in den Kollektor integriert sind, also keinen zusätzlichen Raum über den Kollektorrahmen hinaus beanspruchen. Hierzu ist in dem Isolator 36 des Kollektors gemäß Fig.15 eine Aussparung 50 vorgesehen, in der der Behälter 14f sowie der Absorber 16f angeordnet sind.

Beim Ausführungsbeispiel gemäß Fig.16 ist die Aussparung 50 am unteren Ende des Absorbers angeordnet und durch einen Deckel 52 verschließbar.

Der Vorteil der in den Fig.15 bis 17 gezeigten Anordnungen liegt darin, daß bei der Montage auf der Baustelle keine gesonderte Anbringung der Leitungen zu dem Dehnungsbehälter 14 und dem Absorber 16 erforderlich ist. Vielmehr liegen die genannten Bauteile geschützt vor mechanischen Beschädigungen im Kollektor. Es versteht sich, daß die Aussparungen 50 jeweils eine leitende Verbindung zur äußeren Atmosphäre zwecks Druckausgleich aufweisen.

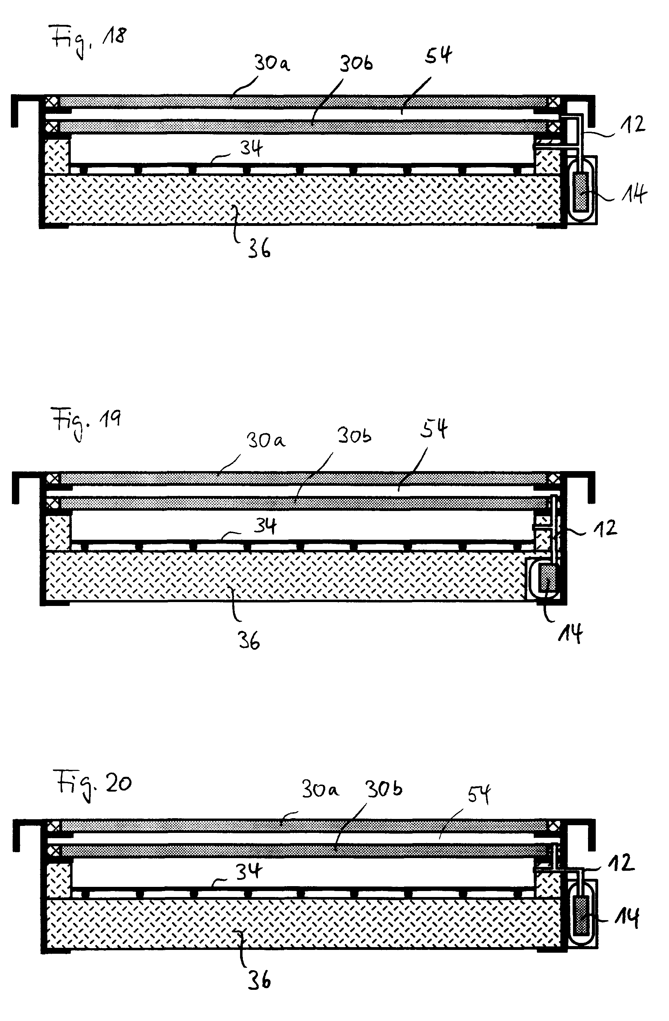

Die Fig.18 bis 20 zeigen eine Abwandlung der vorstehend beschriebenen Ausführungsbeispiele dahingehend, daß die einzelnen Kollektoren jeweils zwei Abdeckscheiben in Form von Glasplatten 30a, 30b aufweisen. Zwischen den Glasplatten 30a, 30b ist jeweils ein Freiraum 54 vorgesehen, der ebenfalls Probleme hinsichtlich der Wärmeexpansion des in ihm enthaltenen Gases aufwirft, die mit der Erfindung gelöst werden können. Die Kollektoren gemäß den Fig.18 bis 20 weisen also jeweils zwei Gasräume auf, die voneinander getrennt sind, nämlich einmal den Freiraum 54 zwischen den Glasplatten und zum anderen den Freiraum, in dem der Strahlungsabsorber 34 angeordnet ist. Die Figuren zeigen, wie diese beiden Räume leitend miteinander verbunden sind, wobei jede Gasbewegung bewirkt, daß Schadstoffe und Feuchtigkeit aus den Räumen entfernt werden. Die gezeigte Anordnung ermöglicht die Einsparung von aufwendigen Dichtungen und auch eine luftdichte Verschließung der beiden Glasplatten 30a, 30b. Auch wird mit den gezeigten Anordnungen erreicht, daß die Belastung des Materials bei Wärmeexpansion weitgehend vermieden ist.

Beim Ausführungsbeispiel gemäß Fig.18 verbinden die Leitungen 12 jeweils den Freiraum 54 zwischen den Glasplatten sowie den Freiraum, in dem der Strahlungsabsorber 34 angeordnet ist, mit einem Dehnungsbehälter 14, wobei in der oben beschriebenen Weise ein Absorber zwischengeschaltet ist.

Beim Ausführungsbeispiel gemäß Fig.19 sind der Behälter 14 und der Absorber 16 (nicht gesondert gezeigt) in den Kollektor integriert.

Beim Ausführungsbeispiel gemäß Fig.20 besteht eine leitende Verbindung zwischen den beiden Gasräumen, wobei eine einzige Leitung 12 zum Behälter 14 abzweigt. Dieses Ausführungsbeispiel wird vorzugsweise dann eingesetzt, wenn mehrere Kollektoren über eine Ringleitung mit einem Dehnungsbehälter und einer Schadstoffe absorbierenden Einrichtung verbunden sind.

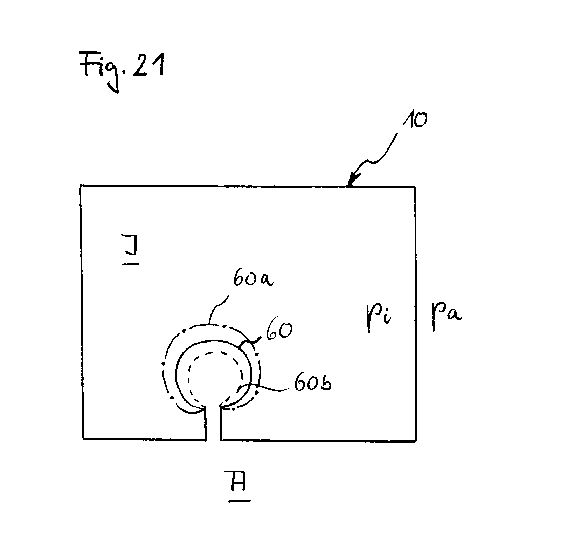

Das in Fig.21 schematisch gezeigte Ausführungsbeispiel zeigt eine Umkehrung des zuvor beschriebenen Gedankens. Während zuvor das Innere des Kollektorgehäuses gasleitend mit einem expansionsfähigen Behälter verbunden ist, sieht das Ausführungsbeispiel gemäß Fig.21 vor, daß umgekehrt die äußere Atmosphäre (bezogen auf das Kollektorgehäuse) gasleitend verbunden ist mit einem expansionsfähigen Körper, der im Inneren des Gehäuses angeordnet ist. Angenommen, der Druck p_{;} im Inneren 1 des Gehäuses 10 ist gleich dem Druck pₐ in der äußeren Atmosphäre A, dann nimmt der Körper 60, der hier als Ballon mit einer gewissen Eigenstabilität ausgebildet ist, die in Fig.21 mit durchgezogener Linie dargestellte Form an. Steigt der Druck p_{;} im Inneren 1 des Gehäuses 10 aufgrund einer thermischen Expansion, dann wird der Körper 60 komprimiert und nimmt die in Fig.21 mit gestrichelter Linie dargestellte Form 60b an. Fällt hingegen der Druck p_{;} im Inneren 1 des Gehäuses 10 aufgrund einer Abkühlung des Gases im Vergleich zum Druck pₐ der äußeren Atmosphäre A ab, dann expandiert der Körper 60 in die in Fig.21 mit strich-punktierter Linie 60a gezeigte Stellung, so daß in jedem Falle der Druck im Inneren des Gehäuses in vorgebbaren Schranken gehalten werden kann. Ein Austausch von Gas zwischen dem Inneren des Gehäuses und der äußeren Atmosphäre ist vermieden.

## Patentansprüche

1. Solarkollektor mit einem Gehäuse (10), mit dem zumindest ein Behälter (14) gasleitend verbunden ist, der bei einer Wärmeexpansion des Gases im Gehäuse sein Volumen vergrößert, dadurch gekennzeichnet, daß in der gasleitenden Verbindung (12) zwischen dem Gehäuse (10) und dem Behälter (14) zumindest eine Schadstoffe absorbierende Einrichtung (10) angeordnet ist.

2. Solarkollektoranlage mit mehreren Kollektoren, die jeweils ein Gehäuse (10a, 10b, 10c) aufweisen, welche über eine gemeinsame Leitung (12) mit zumindest einer Schadstoffe absorbierenden Einrichtung (16) verbunden sind, dadurch gekennzeichnet, daß die Leitung (12) auch zu einem Behälter (14) führt, der bei Wärmeexpansion des Gases in den Gehäusen (10a, 10b, 10c) sein Volumen vergrößert.

3. Solarkollektor bzw. -anlagen nach den Ansprüche 1 oder 2, dadurch gekennzeichnet, daß der sein Volumen bei Wärmeexpansion des Gases vergrößernde Behälter (14) mit dem Gehäuse (10) bzw. den Gehäusen (10a, 10b, 10c) und der gasleitenden Verbindung einen Kreislauf bildet, wobei mittels zumindest eines Ventils (18, 20) die Strömungsrichtung von Gas im Kreislauf festgelegt ist.

4. Solarkollektor bzw. -anlage nach Anspruch 3, dadurch gekennzeichnet, daß mittels des Behälters (14) ein Gasdruck im Gehäuse (10) bzw. den Gehäusen (10a, 10b, 10c) eingestellt ist, der größer ist als der zu erwartende äußere Atmosphärendruck.

5. Solarkollektor bzw. -anlage nach einem der vorhergehenden Ansprüche, dadurch gekennzeichnet, daß der Behälter (14) elastisch dehnbar ist.

6. Solarkollektor bzw. -anlage nach einem der vorhergehenden Ansprüche, dadurch gekennzeichnet, daß an der gasleitenden Verbindung (12) ein Ventil (22, 24) zum Einspeisen oder Ablassen von Gas in bzw. aus dem Gehäuse (10) angeordnet ist.

7. Solarkollektor bzw. -anlage nach einem der vorhergehenden Ansprüche, dadurch gekennzeichnet, daß der zumindest eine Behälter (14) innerhalb der Wandung des Gehäuses (10) integriert ist.

8. Solarkollektor bzw. -anlage nach einem der vorhergehenden Ansprüche, dadurch gekennzeichnet, daß der sein Volumen vergrößernde Behälter (14) in einem Schutzgehäuse (38, 44) angeordnet ist.

9. Solarkollektor mit einem Gehäuse, dadurch gekennzeichnet, daß im Inneren (I) des Gehäuses ein Körper (60) angeordnet ist, der gasleitend mit der äußeren Atmosphäre (A) verbunden ist und der in Abhängigkeit vom Druck (p_{;}) im Inneren (I) des Gehäuses (10) sein Volumen ändert.
